# EUROPEAN PATENT APPLICATION

(11) **EP 2 741 020 A1**
(43) Date of publication of application: **11.06.2014**
(21) Application number: 12740863.1
(22) Date of filing: 11.05.2012
(51) Int. Cl.: F24F 11/02, G06T 1/00, H05B 37/02

(54) **ENERGY MANAGEMENT SYSTEM**

(30) Priority: 13.05.2011 JP 2011108483
(71) Applicant: Kabushiki Kaisha Toshiba, Minato-ku Tokyo 105-8001 (JP)
(72) Inventor: ENOHARA, Takaaki, Tokyo 105-8001 (JP); NAGATA, Kazumi, Tokyo 105-8001 (JP); NODA, Shuhei, Tokyo 105-8001 (JP); BABA, Kenji, Tokyo 105-8001 (JP); NISHIMURA, Nobutaka, Tokyo 105-8001 (JP)
(74) Representative: Granleese, Rhian Jane
(86) International application number: PCT/JP2012/062188
(87) International publication number: WO 2012/157573

(57) **Abstract**

According to one embodiment, system controls electrical apparatus installed in target area. This system includes image sensor and server. Image sensor senses target area, acquires, from sensed image of area, human information representing state of person in area and environmental information concerning environment of area for each of divided areas obtained by dividing area, and outputs human information and environmental information. Server is connected to image sensor via communication network and executes task-ambient control for electrical apparatus based on human information and environmental information for each of areas output from image sensor.

## Description

### Technical Field

Embodiments described herein relate generally to an energy management system.

### Background Art

Conventionally, a target space such as a floor, a living room, a private room, an office, a staircase, or a landing (to be referred to as a target area hereinafter) is divided into a plurality of areas, and air conditioning, illumination, and the like are controlled in accordance with the presence/absence of persons in each area. The presence/absence of persons is detected by, for example, a motion sensor.

### Citation List

### Patent Literature

Patent literature 1: Jpn. Pat. Appln. KOKAI Publication No. 2010-257611
Patent literature 2: Jpn. Pat. Appln. KOKAI Publication No. 2010-266169 Summary of Invention.

### Technical Problem

In the existing technique, no delicate control is performed based on the result of detection of the presence/absence of persons in a target area. Along with the recently increasing awareness about energy saving, a demand has arisen for delicate control such as task-ambient control.

It is an object to provide an energy management system capable of prompting energy saving.

### Solution to Problem

According to an aspect, an energy management system controls an electrical apparatus installed in a target area. This energy management system includes an image sensor and an energy management server. The image sensor senses the target area, acquires, from the sensed image of the target area, human information representing the state of a person in the target area and environmental information concerning the environment of the target area for each of a plurality of divided areas obtained by dividing the target area, and outputs the human information and the environmental information. The energy management server is connected to the image sensor via a communication network and executes task-ambient control for the electrical apparatus based on the human information and the environmental information for each of the divided areas output from the image sensor.

### Brief Description of Drawings

FIG. 1 is a view showing an example of an environment formed in a building to which an energy management system according to an embodiment is applicable.
FIG. 2 is a functional block diagram showing an example of the energy management system according to the embodiment.
FIG. 3 is a functional block diagram showing an example of an image sensor 4 according to the first embodiment.
FIG. 4 is a view for explaining area data.
FIG. 5 is a view for explaining an example of an effect according to the embodiment.
FIG. 6 is a schematic view showing another example of output information.
FIG. 7 is a view showing the relationship between a frame image and the floor map of a target floor 1 according to the second embodiment.
FIG. 8 is a functional block diagram showing an example of an image sensor 4 according to the second embodiment.
FIG. 9 is a schematic view showing an example of a walking person conversion table 43e1 and a seated person conversion table 43e2.
FIG. 10 is a flowchart showing the processing procedure of an image processing unit 42 according to the second embodiment.
FIG. 11 is a view showing an example of a heat value management table 34g according to the fourth embodiment.
FIG. 12 is a functional block diagram showing an example of an image sensor 4 according to the fourth embodiment.
FIG. 13 is a view showing an example of the state of a target floor 1.
FIG. 14 is a view showing an example of a luminance-illuminance conversion table used in the fifth embodiment.
FIG. 15 is a schematic view showing information that combines human information of each area with a floor map.
FIG. 16 is a view for explaining the seventh embodiment.

### Description of Embodiments

Embodiments will now be described with reference to the accompanying drawings.

### (First Embodiment)

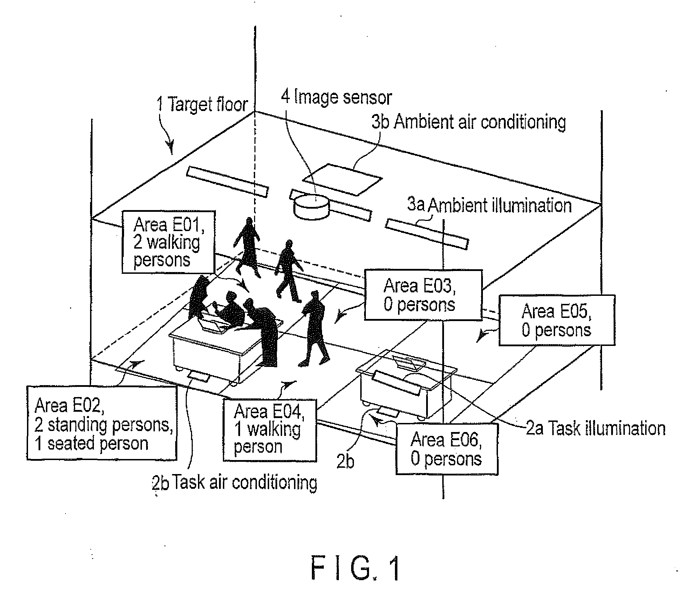

FIG. 1 is schematic view for explaining the relationship between task-ambient control and the states of persons in each divided area set in a real space (to be referred to as a target floor hereinafter) to be implemented by an energy management system according to the embodiment.

A target floor 1 includes, for example, six divided areas E01 to E06. The target floor 1 is provided with a task illumination 2a and task air conditioning 2b for controlling illumination and air conditioning in a working area where at least a person does a necessary work (operation), and an ambient illumination 3a and ambient air conditioning 3b for controlling illumination and air conditioning in an aisle for a walking person or a non-working area that needs minimum brightness and air conditioning. The task illumination 2a, the task air conditioning 2b, the ambient illumination 3a, and the ambient air conditioning 3b are examples of electrical apparatuses according to this embodiment.

Note that as for the task illumination 2a, an illuminator is installed in each of divided areas E01 to E06 or for each desk arranged in each divided area. As for the task air conditioning 2b, an air conditioner including an air outlet is installed on the area ceiling or area floor of each of divided areas E01 to E06.

In addition, for example, the ceiling of the target floor 1 or required portions of the floor are provided with one or a plurality of image sensors 4 for sensing the whole target floor 1 or each of the plurality of divided areas. An example in which one image sensor 4 is provided will be explained below for the descriptive convenience.

When the target floor 1 is divided into, for example, the six areas E01 to E06, and the states of persons in each of divided areas E01 to E06 are detected from images sensed by the image sensor 4, the energy management system according to this embodiment controls task-ambient illumination and air conditioning based on the number of persons in each divided area, the states of the persons, and the like.

The states of persons are represented by information such as area E01 = 2 walking persons, area E02 = 2 standing persons and 1 seated person, area E03 = 0 persons, area E04 = 1 walking person, area E05 = 0 persons, and area E06 = 0 persons. Such information will generically be referred to as human information.

For example, since persons are present in both divided areas E01 and E02, the ambient illumination 3a and ambient air conditioning 3b are turned on. In divided area E02, since a person is working at the desk, the task illumination 2a and task air conditioning 2b are turned on.

On the other hand, divided areas E03 and E04 include only one person walking in the area E04. For this reason, the ambient illumination 3a and ambient air conditioning 3b are turned on to implement energy saving control. Neither of divided areas E05 and E06 has persons. Hence, control is performed to turn off the ambient illumination 3a and ambient air conditioning 3b to implement further energy saving control.

When illuminance in each of divided areas E01 to E06 can be acquired, the illuminance information is taken into consideration to implement energy saving control. As for the illumination in each divided area, for example, light control is executed while considering outside light, thereby implementing energy saving control.

Even air conditioning can be controlled in consideration of insolation.

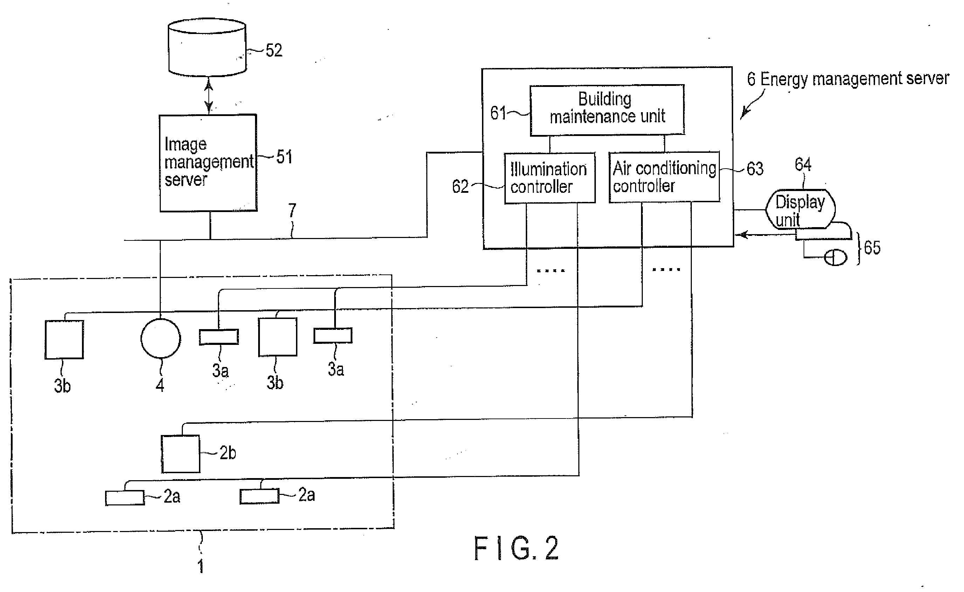

FIG. 2 is a schematic block diagram showing the energy management system according to the embodiment.

The energy management system includes the image sensor 4 installed in the target floor 1, an image management system 5, and an energy management server 6. The image sensor 4 is connected to the image management system 5 and the energy management server 6 via a communication network 7 such as a LAN, WAN, wireless LAN, or the like.

The image sensor 4 has a function of sensing the target floor 1 in a wide visual field, and obtaining, from a plurality of sensed frame images, a person state (human information) and illuminance information in each predetermined divided area of the target floor 1. Details will be described later. Note that information (outside light amount, and the like) concerning the environment of the target floor 1 will generically be referred to as environmental information.

The image management system 5 comprises an image management server 51 and an image-associated data accumulation database 52 for accumulating data associated with images. The image management server 51 has a function of receiving necessary information, for example, information concerning the security in the target floor 1 or information according to a user request out of information sent from the image sensor 4, and accumulating the information in the image-associated data accumulation database 52 together with time data.

The image management server 51 also has a function of collecting process data such as image information from the image sensor 4 in a necessary time period and human information in each divided area and displaying the data based on an information request instruction from an input unit (not shown) such as a keyboard or a mouse.

The image-associated data accumulation database 52 accumulates image information acquired by a plurality of image sensors 4 under, for example, almost the same time data, and human information and illuminance information associated with the image information. The image-associated data accumulation database 52 thus accumulates information necessary for the image management server 51 to execute integration processing of images and image-associated information acquired by the plurality of image sensors 4 retain the security level, or edit the accumulated information to make them visually recognizable based on a user request.

The energy management server 6 includes a building maintenance unit 61, an illumination controller 62, and an air-conditioning controller 63. Based on information sent from the image sensor 4, the building maintenance unit 61 determines task-ambient control concerning illumination and air conditioning in each divided area in accordance with a predetermined control rule (for example, an IF ... THEN rule) or a building maintenance program that meets user demands.

The illumination controller 62 controls the task illumination 2a and the ambient illumination 3a in accordance with a task-ambient control instruction sent from the building maintenance unit 61 concerning illumination in each divided area.

The air-conditioning controller 63 controls the task air conditioning 2b and the ambient air conditioning 3b in accordance with a task-ambient control instruction sent from the building maintenance unit 61 concerning air conditioning in each divided area.

The energy management server 6 is also provided with a monitoring display unit 64 and an input unit 65 such as a keyboard or a mouse to input necessary control instructions.

The image sensor 4 includes an image sensing unit 41, an image processing unit 42, a storage device 43, and a communication unit 44 that sends predetermined output information.

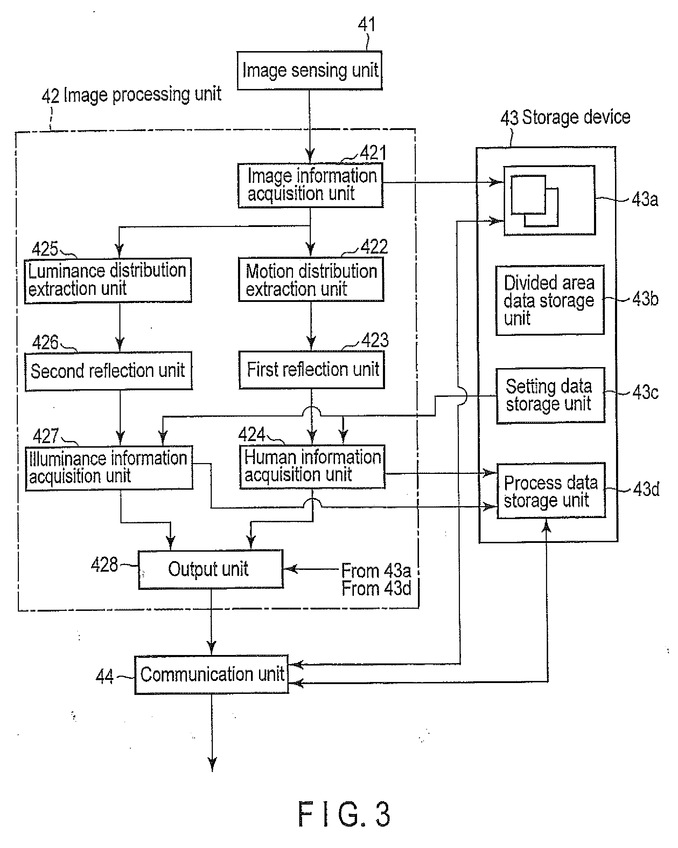

As shown in FIG. 3, the image sensing unit 41 senses the target floor 1 in a wide visual field. The image processing unit 42 performs image processing to extract desired information from a plurality of frame images sensed at a predetermined frame rate. The image processing is executed by a central processing unit (CPU) or the like.

The storage device 43 stores sensed frame image data and other data. The communication unit 44 sends predetermined output information.

Note that the storage device 43 comprises a frame image storage unit 43a, a divided area data storage unit 43b, a setting data storage unit 43c, and a process data storage unit 43d.

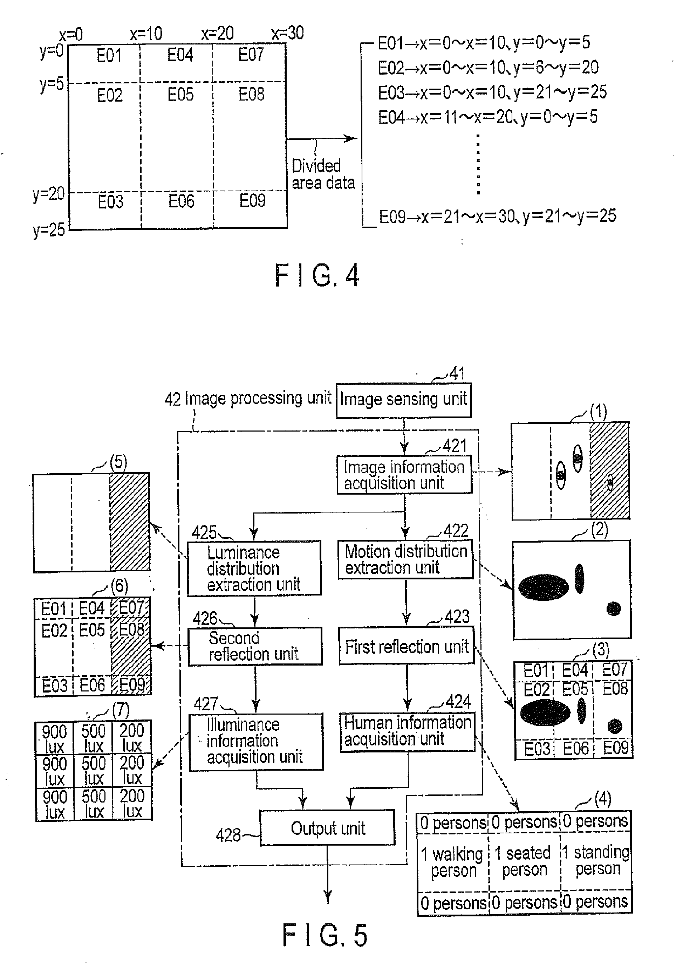

The divided area data storage unit 43b stores divided area data determined by the relationship between the task illumination 2a and task air conditioning 2b, the ambient illumination 3a and ambient air conditioning 3b, and a work (operation) area installed in the target floor 1. The divided area data is, for example, data shown in FIG. 4.

The setting data storage unit 43c stores setting data such as an illuminance conversion formula. The process data storage unit 43d stores data necessary for image processing.

The image sensing unit 41 obtains two-dimensional image data in the target floor 1. As the image sensing unit 41, for example, a visible-light camera (for example, a CCD camera) or infrared camera including a wide-angle lens whose angle of view is, for example, about 180° is used. Note that acquiring a thermal image using an infrared camera as the camera makes it possible to further acquire a heat distribution.

The image processing unit 42 comprises an image information acquisition unit 421, a motion distribution extraction unit 422, a first reflection unit 423, a human information acquisition unit 424, a luminance distribution extraction unit 425, a second reflection unit 426, an illuminance information acquisition unit 427, and an output unit 428.

The image information acquisition unit 421 performs preprocessing (for example, filter processing or digital image conversion processing for analog image data) of time-series frame images sensed by the image sensing unit 41 to acquire image information as a desired frame image and stores it in the frame image storage unit 43a.

The motion distribution extraction unit 422 extracts cumulative difference image information with a video motion from two frame images that are temporarily continuous and are stored in the frame image storage unit 43a. That is, the motion distribution extraction unit 422 acquires difference image information between a plurality of frames based on two pieces of time-series image information. The motion distribution extraction unit 422 binarizes the acquired difference image information based on a predetermined threshold. The motion distribution extraction unit 422 accumulates a plurality of pieces of binarized difference image information, thereby extracting cumulative difference image information of a person.

The first reflection unit 423 determines the state (for example, standing still, seated, or walking) of each person at least from the cumulative difference image information obtained from the time-series image information sensed by the image sensing unit 41. The first reflection unit 423 obtains the positional coordinates of a person in, for example, a standing still, seated, or walking state from, for example, a position serving as a base point corresponding to x = 0 and y = 0 of divided area E01 appearing in the cumulative difference image information, the image sensing magnification, and the numbers of pixels in the x- and y-directions of the cumulative difference image information. After that, the first reflection unit 423 reflects the person state on divided areas E01 to E09 by referring to the divided area data shown in FIG. 4.

The human information acquisition unit 424 has a function of storing the person state in the process data storage unit 43d as process data for each of divided areas E01 to E09 based on the person state (for example, standing still, seated, or walking) reflected on each of divided areas E01 to E09.

The luminance distribution extraction unit 425 has a function of extracting a luminance distribution from information about brightness appearing in a frame image acquired by the image information acquisition unit 421.

The second reflection unit 426 refers to the already determined divided area data shown in FIG. 4 concerning the luminance distribution information appearing in the frame image and reflects the luminance distribution on divided areas E01 to E09.

The illuminance information acquisition unit 427 converts the luminance distribution information into an illuminance in accordance with illuminance conversion formula data set in the setting data storage unit 43c and stores the illuminance of each of divided areas E01 to E09 in the process data storage unit 43d.

The output unit 428 outputs a combination of human information and illuminance information of each of divided areas E01 to E09 as output information.

The communication unit 44 reads out time-series frame images or process data in the process data storage unit 43d based on information for each divided area output from the output unit 428 or a request instruction from the image management system 5 or the like, and sends the information to the communication network 7 in accordance with a communication protocol.

The above-described energy management system will be explained next with reference to FIG. 5.

The image sensing unit 41 of the image sensor 4 installed at a required portion of the target floor 1 senses the target floor 1 at a predetermined time interval (frame rate), extracts time-series frame images, and sends them to the image information acquisition unit 421 of the image processing unit 42.

The image information acquisition unit 421 executes preprocessing such as filtering processing of removing general noise components and the like, thereby acquiring image information (frame image) (1). This image information is stored in the frame image storage unit 43a, as described above.

After that, the image processing unit 42 executes the motion distribution extraction unit 422. The motion distribution extraction unit 422 acquires difference image information from two pieces of frame image information that are continuous, and binarizes the acquired difference image information based on a predetermined threshold. The motion distribution extraction unit 422 accumulates a plurality of pieces of binarized difference image information, thereby extracting cumulative difference image information (2) with a video motion.

More specifically, if a person remains standing without moving, the motion distribution extraction unit 422 extracts cumulative difference image information (2) having, for example, a small circular portion corresponding to the head. If a person is sitting at a desk, the motion distribution extraction unit 422 extracts the cumulative difference image information (2) having a small elliptical portion without a cumulative difference, which includes the shoulders and arms as well as the head of the person. If a person is running, the motion distribution extraction unit 422 extracts the cumulative difference image information (2) having a large elliptical portion having a large area and a cumulative difference with an afterimage. The cumulative difference image information (2) is sent to the first reflection unit 423.

The first reflection unit 423 acquires human area reflection information (3) by reflecting each person according to a behavior pattern on a corresponding divided area based on the positional coordinates of each person obtained from the cumulative difference image information (2) and divided areas E01 to E09 stored in the divided area data storage unit 43b, and sends the human area reflection information (3) to the human information acquisition unit 424.

The human information acquisition unit 424 acquires, from the image of the human pattern shown in (2) reflected on divided areas E01 to E09, human information (4) representing that, for example, there are one walking person in divided area E02, one person sitting at the desk in divided area E05, a standing person in divided area E08, and no person in the remaining divided areas, stores the human information in the process data storage unit 43d, and also sends it to the output unit 428.

On the other hand, the luminance distribution extraction unit 425 extracts luminance distribution information (5) from information about brightness appearing in the frame image acquired by the image information acquisition unit 421. The luminance distribution extraction unit 425 causes the second reflection unit 426 to reflect the extracted luminance distribution information (5) on divided areas E01 to E09, thereby generating luminance area reflection information (6).

Based on the thus generated luminance area reflection information (6), the illuminance information acquisition unit 427 converts the luminance into illuminance information (7) for each of divided areas E01 to E09 using a general luminance-illuminance conversion formula (conversion formula) stored in the setting data storage unit 43c, stores the illuminance information in the process data storage unit 43d, and also sends it to the output unit 428.

The output unit 428 creates output information in accordance with a predetermined divided area order and sends it to the communication network 7 via the communication unit 44. The output information represents, for example, divided area E01: 0 persons, illuminance 900 lux; divided area E02: 1 walking person, illuminance 900 lux; divided area E03: 0 persons, illuminance 900 lux; divided area E04: 0 persons, illuminance 500 lux; divided area E05: 0 seated persons, illuminance 500 lux; ....

The output unit 428 creates the output information based on the human information and illuminance of each divided area acquired by the human information acquisition unit 424 and the illuminance information acquisition unit 427 or by reading out the human information and illuminance of each divided area temporarily stored in the process data storage unit 43d.

Note that at this time, the output information may be sent with, for example, the time data of continuous frame images received from the image sensing unit 41 or the time data of continuous subsequent frame images added at the start.

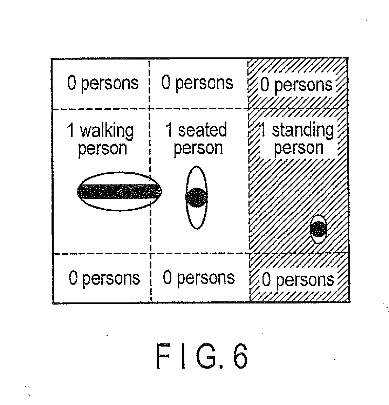

Alternatively, as shown in FIG. 6, the human information including the person states and the numbers of persons may be superimposed on the image of the luminance area reflection information (6) reflected by the second reflection unit 426 and output as an image separately from the above-described output information or in addition to the output information.

The output information sent from the communication unit 44 to the communication network 7 is sent to the energy management server 6.

When the building maintenance unit 61 receives the output information, the energy management server 6 determines in accordance with, for example, the IF THEN rule serving as a control rule that a person is sitting and doing an operation in divided area E05. The energy management server 6 sends, to the air-conditioning controller 63, a control instruction to turn on the task air conditioning 2b corresponding to divided area E05, thereby on-controlling the task air conditioning 2b.

Upon determining that it is dark in divided area E05 because the illuminance is 500 lux, the energy management server 6 sends, to the illumination controller 62, a control instruction to increase the illuminance of the task illumination 2a or turn on the task illumination 2a in the peripheral area E08, thereby on-controlling the task illumination 2a.

Since only one person is walking in divided area E02, the energy management server 6 sends control instructions to turn on the ambient illumination 3a and ambient air conditioning 3b to the illumination controller 62 and the air-conditioning controller 63, respectively, thereby controlling the ambient illumination 3a and ambient air conditioning 3b.

That is, a rule is formed from the human behavior and illuminance condition in divided areas E01 to E09, and the task illumination 2a and task air conditioning 2b and the ambient illumination 3a and ambient air conditioning 3b are controlled, thereby implementing energy saving.

Hence, according to the above-described embodiment, the target floor 1 is finely divided in advance. The state (for example, walking, seated, or standing) of each person obtained from the image sensor 4 is determined. The person state is reflected on each of the finely divided areas, and output information is sent to the energy management server 6. Hence, the energy management server 6 can control the task illumination 2a and task air conditioning 2b and the ambient illumination 3a and ambient air conditioning 3b delicately in accordance with a predetermined rule while considering the state of each person and, for example, illuminance information in each divided area.

### (Second Embodiment)

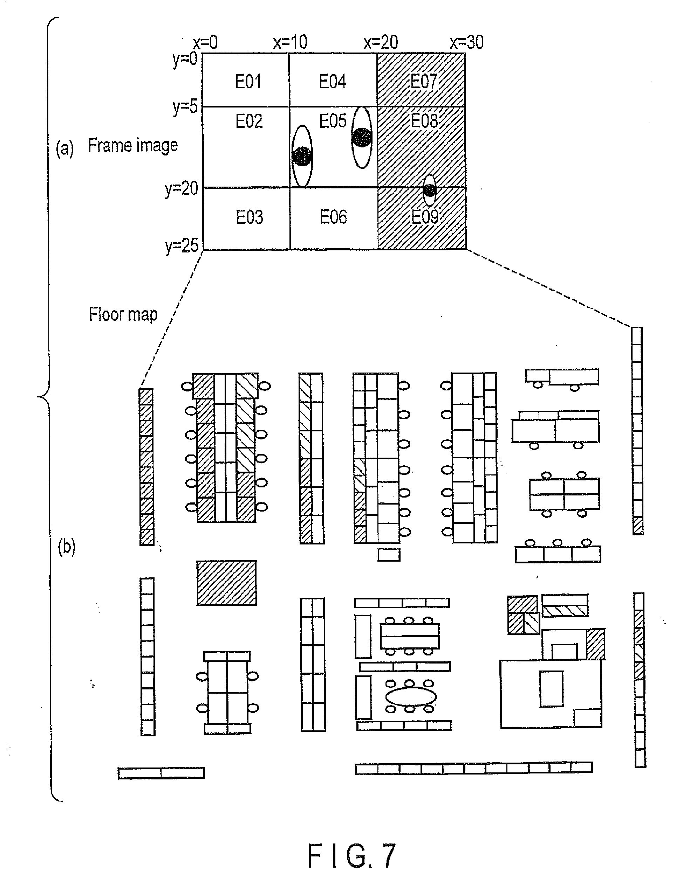

FIG. 7 is a view for explaining another example of an image sensor 4 included in an energy management system according to this embodiment.

As described above, a target floor 1 is divided into nine areas E01 to E09 based on the relationship between task illumination 2a and task air conditioning 2b, ambient illumination 3a and ambient air conditioning 3b, and a working (operation) area. The nine divided areas E01 to E09 of frame image sensed by an image sensing unit 41 shown in FIG. 7(a) and a floor map shown in FIG. 7(b) are made to correspond to each other.

Hence, providing a conversion table for the frame image and the floor map enables to convert the positional coordinates of a person on the frame image into a position on the floor map in the real space.

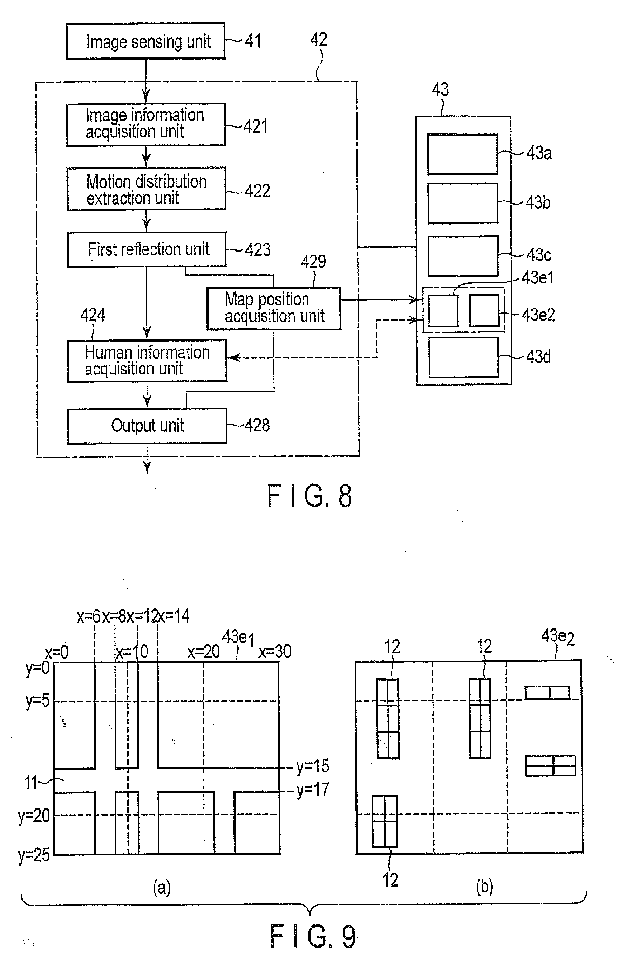

In the second embodiment, a map conversion table corresponding to a person state is used to convert the positional coordinates of a person on a frame image into an accurate position on the floor map in the real space. For example, as shown in FIG. 8, a walking person conversion table 43e1 and a seated person conversion table 43e2 are prepared in a storage device 43.

Based on area reflection information (3) reflected by a motion distribution extraction unit 422 and a first reflection unit 423, a map position acquisition unit 429 or a human information acquisition unit 424 selects the walking person conversion table 43e1 if a person is a walking person. The map position acquisition unit 429 or the human information acquisition unit 424 selects the seated person conversion table 43e2 if a person is a seated person. The map position acquisition unit 429 or the human information acquisition unit 424 determines the position of each person on the floor map.

The walking person conversion table 43e1 is a conversion table that defines positional coordinate data only on an aisle 11 where a walking person passes, as schematically shown in FIG. 9(a). From the positional coordinates of a walking person on the image and the positional coordinates of the aisle 11, the position in the aisle 11 on the floor map where the positional coordinates of the walking person lie can easily be specified.

On the other hand, the seated person conversion table 43e2 is a conversion table that defines positional coordinate data in each desk group at which a seated person sits, as schematically shown in FIG. 9(b). From the positional coordinates of a seated person on the image and the positional coordinate data of each predetermined group of a plurality of desks 12, the position of the desk 12 on the floor map where the positional coordinates of the seated person lie can easily be specified.

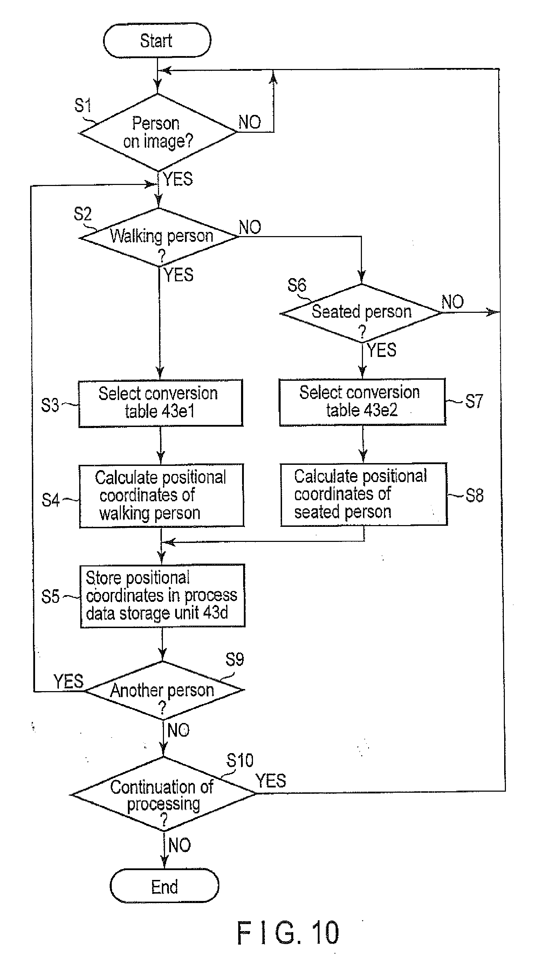

An example of processing of causing the map position acquisition unit 429 or the human information acquisition unit 424 in an image processing unit 42 to specify the position of a person on the map will be described with reference to FIG. 10.

First, based on cumulative difference image information (2) with a video motion obtained by the motion distribution extraction unit 422 or the human area reflection information (3) reflected by the first reflection unit 423, the map position acquisition unit 429 or the human information acquisition unit 424 determines where a person is present in any of divided areas E01 to E09 (step S1). Upon determining that a person is present, the map position acquisition unit 429 or the human information acquisition unit 424 determines whether the person is a walking person (step S2).

If the person is a walking person, the map position acquisition unit 429 or the human information acquisition unit 424 selects the walking person conversion table 43e1 from the storage device 43 (step S3), and then compares the positional coordinates of the walking person already specified by the first reflection unit 423 with the positional coordinates of the aisle 11 defined in the walking person conversion table 43e1. The map position acquisition unit 429 or the human information acquisition unit 424 determines the position of the aisle on the map from the numbers of pixels in the x- and y-directions, that is, {positional coordinates of walking person ± (numbers of pixels in x- and y-directions x length of one pixel unit)} corresponding to the difference between the positional coordinates of the walking person and the positional coordinates of the aisle 11 (step S4), and stores the position of the aisle in a process data storage unit 43d (step S5).

On the other hand, upon determining in step S2 that the person is not a walking person, the map position acquisition unit 429 or the human information acquisition unit 424 determines whether the person is a seated person (including a standing person) (step S6). Upon determining that the person is a seated person (including a standing person), the map position acquisition unit 429 or the human information acquisition unit 424 selects the seated person conversion table 43e2 from the storage device 43 (step S7).

The map position acquisition unit 429 or the human information acquisition unit 424 compares the positional coordinates of the seated person already specified by the first reflection unit 423 with the positional coordinates of the desk 12 defined in the seated person conversion table 43e2. The map position acquisition unit 429 or the human information acquisition unit 424 determines the position of the desk 12 on the map from the numbers of pixels in the x- and y-directions corresponding to the difference between the positional coordinates of the seated person and the positional coordinates of the aisle 12 (step S8), and stores the position of the desk in the process data storage unit 43d (step S5).

Subsequently, the map position acquisition unit 429 or the human information acquisition unit 424 determines whether another person is present in the same or another divided area on the image (step S9). If another person is present, the map position acquisition unit 429 or the human information acquisition unit 424 returns the process to step S2 to repetitively execute the series of processes. If no other person is present, the map position acquisition unit 429 or the human information acquisition unit 424 determines whether to continue the processing (step S10). To continue the processing, the process returns to step S1.

Hence, according to the above-described embodiment, the map position of a person on the screen is specified, and for example, the positional information of the person on the real space is sent in addition to human information and illuminance information of each of the above-described divided areas E01 to E09. Hence, for example, an energy management server 6 can specify, out of the task air conditioning 2b and the ambient air conditioning 3b arranged on the floor map provided in advance, for example, the task air conditioning 2b or ambient air conditioning 3b that includes any air outlet and lies at a position closest to a person present. Executing air-conditioning control based on the result allows to efficiently perform air-conditioning control.

### (Third Embodiment)

In this embodiment, a plurality of conversion tables having different unit granularities are prepared. As in the second embodiment, a map position acquisition unit 429 is used to select a conversion table based on a person state and determines the position in the real space.

More specifically, when an image sensing unit 41 senses a target floor 1, the cumulative difference of a walking person in the image is large, and the position can be identified in a large area. On the other hand, the cumulative difference of a seated person in the image is small, and the position can be identified in a small area.

To do this, the unit granularity of the map conversion table is changed depending on the person state. For example, the unit granularity of a seated person conversion table 43e2' (corresponding to the seated person conversion table 43e2 in FIG. 9) is made smaller than that of a walking person conversion table 43e1' (corresponding to the walking person conversion table 43e1 in FIG. 9).

The aisle person map conversion table 43e1' schematically defines positional coordinate data corresponding to an aisle 11 where a walking person passes. From the positional coordinates of a walking person on the image and the positional coordinate data of each aisle 11, the position of the aisle 11 on the map table map can be specified.

From the positional coordinates of a seated person and the positional coordinates of each group of a plurality of desks, the desk map conversion table 43e2' can specify the position of the desk on the map at which the seated person sits.

As in the second embodiment, upon determining from image information that a person state indicates a walking person, the map position acquisition unit 429 selects the aisle person map conversion table 43e1'. If a person is sitting, the map position acquisition unit 429 selects the desk map conversion table 43e2'. The map position acquisition unit 429 specifies the position of the person in the floor map from the positional coordinates of the walking person or seated person on the image and the positional coordinates data described in the conversion table 43e1' or 43e2'.

Even a building maintenance unit 61 of an energy management server 6 can specify, out of task air conditioning 2b and ambient air conditioning 3b arranged on the floor map, for example, the task air conditioning 2b or ambient air conditioning 3b that includes any air outlet and lies at a position closest to a person present on the screen. Executing air-conditioning control based on the result allows to efficiently perform air-conditioning control. Since the position of a seated person can be specified more accurately than the position of a walking person, efficient task-ambient control can be performed.

### (Fourth Embodiment)

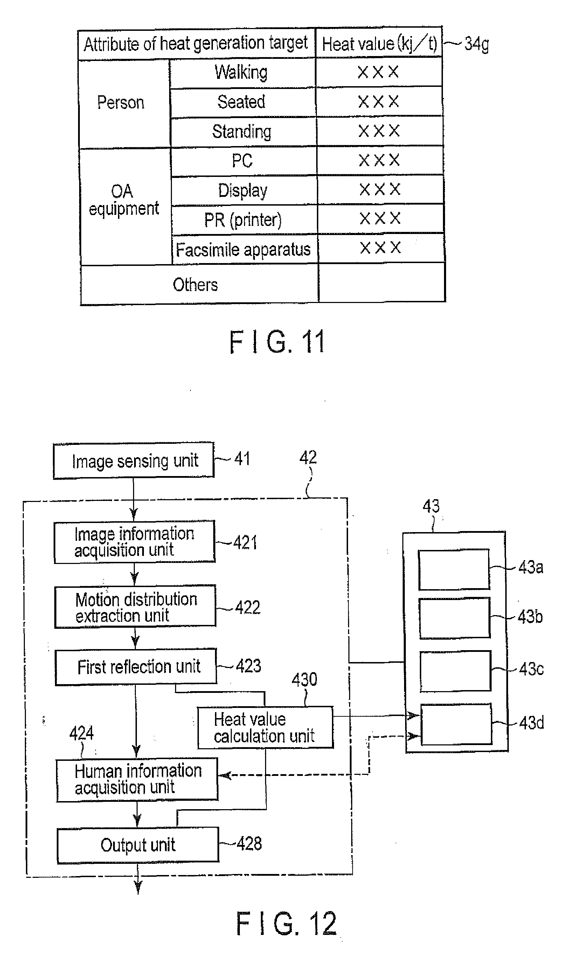

In this embodiment, a storage device 43 stores a heat value management table 34g in advance, which considers the attribute (for example, aisle, desk, PC, display, or printer PR) of a heat generation target including a person state (walking, seated, or standing), as shown in FIG. 11. In addition, a heat value calculation unit 430 is provided on the output side of a first reflection unit 423.

FIG. 12 is a functional block diagram showing an example of an image sensor 4 according to the fourth embodiment. Referring to FIG. 12, the heat value calculation unit 430 calculates a total heat value from the person state and the attribute of a heat generation target in each of divided areas E01 to E09 obtained from cumulative difference image information (2) with a video motion obtained from a motion distribution extraction unit 422 and human area reflection information (3) reflected by the first reflection unit 423. The heat value is stored in a process data storage unit 43d. When an output unit 428 sends human information for each of divided areas E01 to E09, the total heat value is also sent.

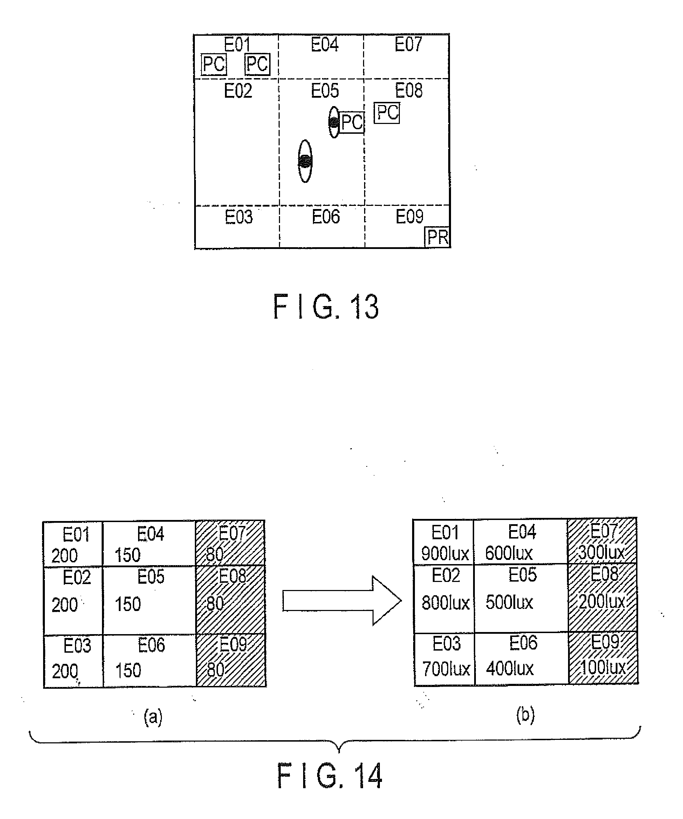

In divided areas E01 to E09 shown in FIG. 13, the heat value calculation unit 430 acquires the total heat value to be described below by calculation. That is, since two PCs are installed but no person is present in divided area E01, and the two PCs are off, the heat value calculation unit 430 obtains a total heat value corresponding to the heat value of one PC in an operation standby state x 2. Since two persons + one PC are present in divided area E05, the heat value calculation unit 430 obtains a total heat value corresponding to {(heat value of one person x 2) + (heat value of one operating PC)}. For a divided area having an aisle where a person frequently walks, the heat value calculation unit 430 calculates a total heat value = heat value of a person during walking x average number of walking persons. The heat value calculation unit 430 stores the total heat value in the process data storage unit 43d.

The output unit 428 sends the total heat value of each of divided areas E01 to E09 to an energy management server 6 together with or separately from human information acquired by a human information acquisition unit 424. A building maintenance unit 61 of the energy management server 6 can correct temperature control of task air conditioning 2b and ambient air conditioning 3b in consideration of the total heat value of each of divided areas E01 to E09 so as to comfortably and efficiently execute air-conditioning control.

### (Fifth Embodiment)

FIG. 14 is a view showing a luminance-illuminance conversion table so as to explain the fifth embodiment.

In the first embodiment, a luminance obtained in each of divided areas E01 to E09 is converted into an illuminance in accordance with an illuminance conversion formula stored in the setting data storage unit 43c. In the fifth embodiment, for example, the illuminance value level of the luminance (brightness) of an image obtained by an image information acquisition unit 421 is checked for each of divided areas E01 to E09 in consideration of the layout of desks and OA equipment. A storage device 43 stores a correspondence conversion table 43h to obtain an optimum illuminance for each of divided areas E01 to E09.

An illuminance information acquisition unit 427 converts the average luminance obtained from the image of each of divided areas E01 to E09 acquired by a second reflection unit 426 into an illuminance of each of divided areas E01 to E09 in accordance with a conversion ratio as shown in FIGS. 14(a) and 14(b). The illuminance information acquisition unit 427 calculates a comfortable illuminance distribution for each of divided areas E01 to E09. This illuminance distribution is usable as the index data of area illuminance.

### (Sixth Embodiment)

In this embodiment, for example, an original image sensed by an image sensor 4 or an inter-frame difference based image created by a motion distribution extraction unit 422 is stored in a process data storage unit 43d. Alternatively, a bird's-eye view (floor map) 43i of a target floor 1 is stored in a setting data storage unit 43c or the process data storage unit 43d in advance.

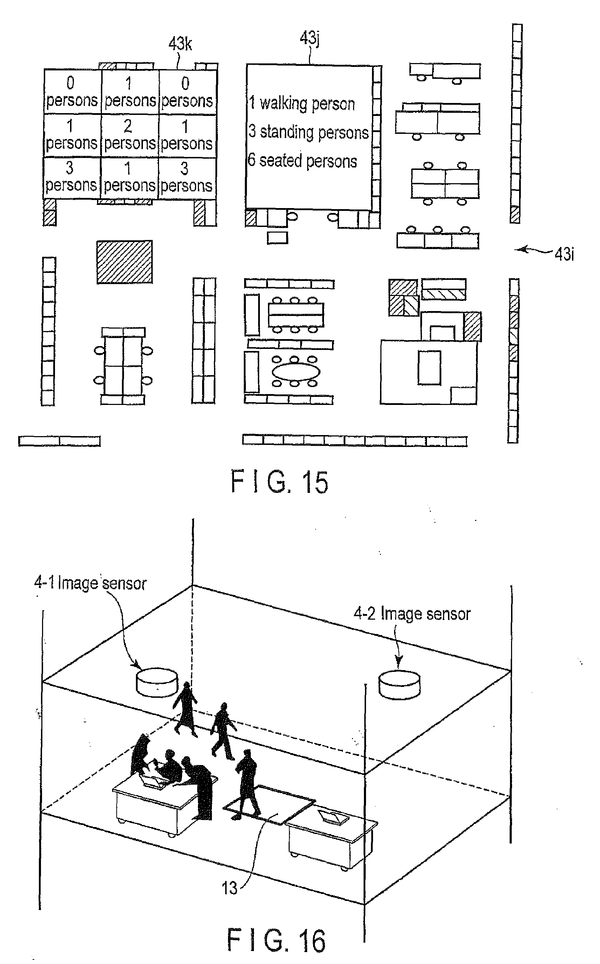

The original image sensed by the image sensor 4, the inter-frame difference based image, or the bird's-eye view 43i shown in FIG. 15, which is stored in the process data storage unit 43d or the like, is sent to an energy management server 6 in a remote site as sensing information. Human information 43j obtained by a human information acquisition unit 424 may be superimposed on at least one of the original image, the inter-frame difference based image, and the bird's-eye view 43i.

The above-described arrangement makes it possible to immediately grasp the states of persons in the target floor 1 by displaying them on, for example, a display unit 64 of the energy management server 6.

### (Seventh Embodiment)

FIG. 16 is a view for explaining the seventh embodiment. That is, in this embodiment, a plurality of image sensors 4-1 and 4-2 are often installed such that an overlap detection area 13 of the plurality of image sensors 4-1 and 4-2 exists.

As a result, if, for example, different pieces of human information are output from the plurality of image sensors 4-1 and 4-2, the output information needs to be processed based on a predetermined rule.

As the output information processing rule, for example, output information acquired from an image sensed at the latest time out of the plurality of image sensors 4-1 and 4-2 may be employed. Alternatively, output information related to an image sensor, for example, the image sensor 4-1 on a side closer to the event occurrence position of a person (for example, the seated position of a person) may be given higher priority. If an illuminance value is included in output information, output information in which one of the maximum value, minimum value, and average value of the illuminance satisfies a predetermined standard may be given higher priority.

According to the above-described embodiment, when the sensing ranges of the plurality of image sensors 4-1 and 4-2 overlap, and different pieces of output information are obtained based on the overlap range, optimum information is preferentially employed in accordance with a predetermined rule. Using the optimum information for task-ambient control enables to implement safer control.

### (Other Embodiments)

In the above-described embodiments, walking, seated, or standing is determined as the state of a person. Instead, gender detection may be done based on the color and pattern of clothing, or the temperature measured by a thermometer in each divided area may be used. These pieces of information may be output as output information for each divided area.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. Reference Signs List
- 1: target floor
- 2a: task illumination
- 2b: task air conditioning
- 3a: ambient illumination
- 3b: ambient air conditioning
- 4,4-1,4-2: image-sensor
- 6: energy management server
- 7: communication network
- 41: image sensing unit
- 42: image processing unit
- 43: storage device
- 43a: frame image storage unit
- 43b: divided area data storage unit
- 43c: setting data storage unit
- 43d: process data storage unit
- 43e1: walking person conversion table
- 43e2: seated person conversion table
- 44: communication unit
- 51: image management server
- 52: database
- 61: building maintenance unit
- 62: illumination controller
- 63: air-conditioning controller
- 64: display unit
- 421: image information acquisition unit
- 422: motion distribution extraction unit
- 423: first reflection unit
- 424: human information acquisition unit
- 425: luminance distribution extraction unit
- 426: second reflection unit
- 427: illuminance information acquisition unit
- 428: output unit
- 429: map position acquisition unit
- 430: heat value calculation unit

## Claims

1. An energy management system for controlling an electrical apparatus installed in a target area, comprising:
an image sensor configured to sense the target area, acquire, from a sensed image of the target area, human information representing a state of a person in the target area and environmental information concerning an environment of the target area for each of a plurality of divided areas obtained by dividing the target area, and output the human information and the environmental information; and
an energy management server connected to the image sensor via a communication network and configured to execute task-ambient control for the electrical apparatus based on the human information and the environmental information for each of the divided areas output from the image sensor.

2. The energy management system according to claim 1, further comprising an image management server connected to the communication network and configured to acquire, from the image sensor, at least one of security information of the target area and image-associated information required by a user and accumulate the at least one of the security information and the image-associated information.

3. The energy management system according to claim 1, wherein the electrical apparatus is at least one of task air conditioning, ambient air conditioning, task illumination, and ambient illumination.

4. The energy management system according to claim 1, wherein
the image sensor comprises:
an image sensing unit configured to sense the target area;
an image processing unit configured to perform image processing of an image sensed by the image sensing unit; and
a storage device configured to store data necessary for image processing,
the image processing unit comprising:
a person state distribution extraction unit configured to extract a distribution of the state of the person from a plurality of pieces of frame image information sensed by the image sensing unit;
a first reflection unit configured to reflect the state of the person extracted by the person state distribution extraction unit on the divided areas; and
a human information acquisition unit configured to acquire the human information for each of the divided areas on which the state of the person has been reflected.

5. The energy management system according to claim 4, wherein the image processing unit further comprises:
a luminance distribution extraction unit configured to extract a luminance distribution from the frame image information sensed by the image sensing unit;
a second reflection unit configured to reflect the luminance distribution extracted by the luminance distribution extraction unit on the divided areas; and
an illuminance information acquisition unit configured to convert a luminance of each of the divided area on which the luminance distribution has been reflected into an illuminance.

6. The energy management system according to claim 4, wherein
the storage device stores a plurality of map conversion tables to define positional coordinates in accordance with the state of the person, and
the image processing unit further comprises a map position acquisition unit configured to convert a person appearing in the image into a position on a floor map,
the map position acquisition unit selecting one of the map conversion tables in accordance with the state of the person belonging to the divided area on which the state of the person has been reflected by the first reflection unit, converting positional coordinates of the person on the image into a map position by the map conversion table, and outputting the map position.

7. The energy management system according to claim 6, wherein a granularity to define the positional coordinates in accordance with the state of the person changes between the plurality of map conversion tables.

8. The energy management system according to claim 4, wherein
the storage device stores a heat value management table to define a heat value concerning an attribute serving as a heat generation target including the state of the person,
and
the image processing unit further comprises a heat value calculation unit configured to calculate a heat value for each of the divided areas,
the heat value calculation unit calculating a total heat value of the attribute serving as the heat generation target including the state of the person for each of the divided areas and outputting the total heat value.

9. The energy management system according to claim 5, further comprising illuminance conversion formula data,
wherein the illuminance information acquisition unit converts the luminance of each of the divided areas into the illuminance using the illuminance conversion formula data

10. The energy management system according to claim 4, wherein an image obtained by superimposing the human information on at least one of the image sensed by the image sensor, an inter-frame difference image information extracted by the person state distribution extraction unit, and a bird's-eye view representing a floor map is output.

11. The energy management system according to claim 4, wherein an image obtained by superimposing the human information integrated for each of the divided areas on at least one of the image sensed by the image sensor, an inter-frame difference image information extracted by the person state distribution extraction unit, and a bird's-eye view representing a floor map is output.

12. The energy management system according to claim 1, wherein the energy management server receives at least human information for each of the divided areas sent from the image sensor and controls task air conditioning in accordance with a predetermined rule.

13. The energy management system according to claim 1, wherein the energy management server receives at least human information and environmental information for each of the divided areas sent from the image sensor and controls task air conditioning and task illumination in accordance with a predetermined rule.

14. The energy management system according to claim 1, wherein the energy management server receives at least human information and environmental information for each of the divided areas sent from the image sensor and controls task illumination and task air conditioning and ambient illumination and ambient air conditioning in accordance with a predetermined rule.

15. The energy management system according to claim 1, wherein
if a plurality of image sensors are provided,
images sensed by the plurality of image sensors at least partially overlap each other,
and
different pieces of output information are obtained based on an overlap range of the sensed images, the energy management server employs output information given higher priority in accordance with one of
rule 1: output information acquired from an image sensed at a latest time is given higher priority,
rule 2: output information of an image sensor closer to an event occurrence position of a person is given higher priority, and
rule 3: output information in which one of a maximum value, a minimum value, and an average value of an illuminance included in the output information satisfies a predetermined standard is given higher priority, and
executes the task-ambient control based on the employed output information.

16. The energy management system according to claim 5, further comprising a correspondence conversion table between a brightness of an image appearing in each of the divided areas and an optimum illuminance determined by an environmental condition including equipment in the target area,
wherein the illuminance information acquisition unit converts the luminance in each of the divided areas into the illuminance using the correspondence conversion table.
